(19) Europäisches Patentamt
European Patent Office
Office européen des brevets

(11) Publication number: **0 151 833**
**B1**

# (12) EUROPEAN PATENT SPECIFICATION

(45) Date of publication of patent specification: **14.10.87**

(51) Int. Cl.$^4$: **E 21 B 43/25,** E 21 B 43/22

(21) Application number: **84300685.9**

(22) Date of filing: **03.02.84**

## (54) Method of increasing hydrocarbon production by remedial well treatment.

(43) Date of publication of application:
**21.08.85 Bulletin 85/34**

(45) Publication of the grant of the patent:
**14.10.87 Bulletin 87/42**

(84) Designated Contracting States:
**AT DE FR GB IT NL**

(56) References cited:
**GB-A-2 116 228**
**GB-A-2 116 970**
**US-A-2 765 851**
**US-A-4 404 377**

(73) Proprietor: **HALLIBURTON COMPANY**
**P.O. Drawer 1431**
**Duncan Oklahoma 73536 (US)**

(72) Inventor: **Penny, Glenn Stanley**
**2115 Westbriar**
**Duncan Oklahoma 73533 (US)**
Inventor: **Briscoe, James Earl**
**Route 1 Box 16**
**Duncan Oklahoma 73533 (US)**

(74) Representative: **Wain, Christopher Paul et al**
**A.A. THORNTON & CO. Northumberland House**
**303-306 High Holborn**
**London WC1V 7LE (GB)**

**EP 0 151 833 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a method of increasing hydrocarbon production from a subterranean formation having impaired permeability as the result of well drilling or prior stimulation treatments.

Various procedures have been developed and utilized heretofore to increase the flow of hydrocarbons from hydrocarbon-containing subterranean formations penetrated by well bores. For example, a commonly used production stimulation technique involves creating and extending fractures in the subterranean formation to provide flow channels therein through which hydrocarbons flow from the formation to the well bore. The fractures are created by introducing a fracturing fluid into the formation at a flow rate which exerts a sufficient pressure on the formation to create and extend fractures therein. Solid fracture proppant materials, such as sand, are commonly suspended in the fracturing fluid so that upon introducing the fracturing fluid into the formation and creating and extending fractures therein, the proppant material is carried into the fractures and deposited therein whereby the fractures are prevented from closing due to subterranean forces when the introduction of the fracturing fluid has ceased.

In such formation fracturing and other production stimulation procedures, at least a portion of the stimulation fluid or fracturing fluid will leak off into the formation and will reduce the relative permeability of the invaded region of the formation. After fluid injection has ceased, imbibition will begin to alter the fluid distribution within the formation, and when production begins, the fluid will move from the formation into the fracture. It is important to leave the formation after treatment with the maximum permeability or conductivity possible whereby hydrocarbons contained in the formation will flow to the well bore with the least possible restriction. However, substantially all stimulation fluids or fracturing fluids, no matter how carefully they are selected, will do some damage to the formation adjacent to the fracture. In order to achieve maximum conductivity of hydrocarbons from subterranean formations, whether or not such formations have been fractured or otherwise stimulated, it has heretofore been the practice to cause the formation surfaces to remain water wet after treatment. Such water wetting has been shown to provide an improved flow of hydrocarbons through flow channels and capillaries in the magnitude of about three times greater than when the formation surfaces are hydrocarbon wet.

The water wetting of solid surfaces in subterranean hydrocarbon-containing formations as well as the surfaces of solid proppant material deposited therein has heretofore been accomplished using surfactants in the stimulation fluids or fracturing fluids whereby a layer of water or water and surfactant is spread over the solid surfaces. Such layers of water or water and surfactant are extremely viscous near the interface of the layer and the solid surface, and while the layer provides a slippage or lubricating effect at the interface thereof with hydrocarbons which decreases the resistance to flow, the layer reduces the effective diameter of capillaries and flow channels. This reduction of effective diameter restricts fluid flow, and in very small capillaries or flow channels becomes highly significant.

If the formation relative permeability has been damaged by the invasion of the stimulation fluid or fracturing fluid into the formation and this damage results in an increase in the capillary pressure in the damaged region, the capillary pressure in the damaged region then acts as a pressure sink drawing additional water to the damaged region. Unless the pressure drawdown upon attempting production is large enough to overcome the increased capillary pressure, a complete blocking of the formation in the damaged region will occur. Even when the pressure drawdown is sufficient to overcome the capillary pressure, production can be reduced because of the decrease in the capillary radius of the flow channels caused by the layer of water coating the solid surfaces in the formation.

In our GB—A—2116228A, we describe a method of increasing the production of hydrocarbons from a hydrocarbon-containing substerranean formation, comprising contacting said formation with at least one cationic perfluoro compound whereby said compound is adsorbed onto surfaces of said formation, said cationic perfluoro compound(s) being selected from compounds of the formula:

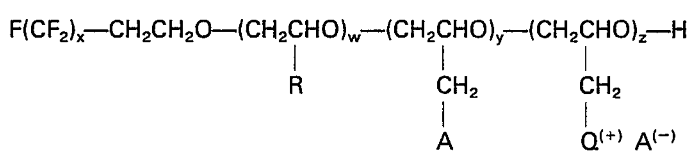

I

wherein x is an integer from 2—12 or an integer or fractional integer representing an average value of from 2—12; w and y are both individually 0 or integers from 1—20, or integers or fractional integers representing average values of from 0—20; z is 0 or an integer from 1—20, or an integer or fractional integer representing an average value of from 0—20, the sum of y and z being from 1—20; R is a hydrogen, methyl, ethyl or propyl radical; A is a halogen chosen from chlorine, bromine or iodine; and $Q^+$ is a cationic nitrogen radical from the group consisting of an aromatic amino radical, a heterocyclic amino radical, and an amine radical represented by the formula:

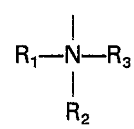

wherein $R_1$, $R_2$ and $R_3$ are each a hydrocarbon radical containing from 1—30 carbon atoms, an aromatic hydrocarbon radical such as phenyl, or any alkyl-substituted phenyl radical, or a hydrogen atom, provided that at least one or $R_1$, $R_2$ and $R_3$ is an aliphatic hydrocarbon radical containing from 1—30 carbon atoms or an aromatic hydrocarbon, and that when any one of $R_1$, $R_2$ and $R_3$ contains more than 4 aliphatic carbon atoms or an aromatic hydrocarbon, the other two radicals are each chosen from the group consisting of hydrogen, methyl, and ethyl radicals.

We have now found that these perfluoro compounds can also be used to treat water-wet formation surfaces provided that a particular solvent is also present. Thus, in accordance with the present invention, there is provided a method of increasing the production of hydrocarbons from a hydrocarbon-containing subterranean formation which has impaired permeability as a result of formation invasion by aqueous fluids, wherein the formation is contacted with a penetrating solvent capable of disrupting at least a portion of any aqueous layer present on the solid surfaces within said formation, and at least one of said cationic perfluoro compounds.

Thus, in the present invention, the penetrating solvent strips water or other aqueous fluids from the formation solids and the perfluoro compounds then are caused to be adsorbed onto the solid surfaces in the subterranean hydrocarbon-containing formations in a very thin layer, i.e. a layer which is preferably one molecule thick and significantly thinner than a layer of water or water-surfactant mixture. The perfluoro compounds so adsorbed on the surfaces resist or substantially reduce the wetting of the surfaces by water and hydrocarbons, and provide high interfacial tensions between the surfaces and water and hydrocarbons which allows slippage of hydrocarbons at the hydrocarbon-surface interface and significantly increases the flow of hydrocarbons through capillaries or flow channels in the formations.

The penetrating solvent can, for example, comprise a lower alcohol such as methanol, ethanol, propanol or any other alcohol containing from about 1 to about 5 carbon atoms. The penetrating solvent also can be comprised of acetone or any other fluid which is capable of disrupting the water layer which coats the solid surfaces in the formation.

The compounds of formula I prevent solid surfaces from becoming water or hydrocarbon wet but do not create either or both significantly thick or viscous layers thereon.

In formula I, the halogen (A) may be present as either a halo radical bonded to carbon or as an anion. The cationic nitrogen-containing radical $Q^+$ is preferably selected from the group consisting of:

(i) an aromatic or heterocyclic amino radical formed from the following compounds: 2-H-pyrrole, pyrrole, imidazole, pyrazole, pyridine, pyrazine, pyrimidine, pyridazine, indolizine, isoindole, 3H-indole, indole, 1H-indazole, purine, 4H-quinolizine, quinoline, isoquinoline, phthalazine, naphthyridine, quinoxaline, quinazoline, 4-H-carbazole, carbazole β-carboline, phenanthridine, acridine, phenathroline, phenazine, imidazolidine, phenoxazine, cinnoline, pyrrolidine, pyrroline, imidazoline, piperidine, piperazine, indoline, isoindoline, quinuclinidine, morpholine, azocine, azepine, 2H-azepine, 1,3,5-triazine, thiazole, pteridine, dihydroquinoline, hexamethylene imine, indazole; and

(ii) an amine radical represented by the formula:

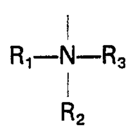

wherein $R_1$, $R_2$ and $R_3$ are from the group consisting of aliphatic hydrocarbon radicals containing from 1 to 30 carbon atoms, aromatic hydrocarbon radicals such as phenyl and any alkyl substituted phenyl radical, and hydrogen radicals, provided that at least one of $R_1$, $R_2$ and $R_3$ is an aliphatic hydrocarbon radical containing from 1 to 30 carbon atoms or an aromatic hydrocarbon, and that when any one of the $R_1$, $R_2$ and $R_3$ radicals contains more than four aliphatic carbon atoms or an aromatic hydrocarbon, the other two radicals are each chosen from the group consisting of hydrogen, methyl, and ethyl radicals.

In the above formula, x is preferably an integer of from 4 to 10 or an integer or fractional integer representing an average value of from 4 to 10; w is preferably an integer of from 0 to 12 or is an integer or fractional integer representing an average value of from 0 to 12; y is preferably 0; z is preferably an integer of from 1 to 8 or an integer or fractional integer representing an average value of from 1 to 8; R is preferably chosen from the group consisting of hydrogen and methyl radicals, or mixtures thereof; A is preferably chlorine; and $Q^+$ is preferably chosen from the group of cationic nitrogen-containing radicals formed by reacting trimethylamine, pyridine, quinoline, isoquinoline, N,N-dimethyl aniline, N-methyl morpholine, or morpholine with a chloro radical functional group.

Most preferably, in the above formula x is an integer of from 6 to 8 or an integer or fractional integer representing an average value of from 6 to 8; w is an integer of from 0 to 8 or an integer or fractional integer representing an average value of from 0 to 8; y is 0; z is an integer of from 1 to 4 or an integer or fractional integer representing an average value of from 1 to 4; R is from the group of hydrogen radicals and methyl radicals and/or mixtures thereof; A is chlorine; and $Q^+$ is from the group of cationic nitrogen-containing

radicals formed by reaction of trimethylamine, pyridine, quinoline, morpholine, and isoquinoline with a pendant chloro radical.

The term "integer or fractional integer representing an average value" indicates that where two or more such compounds are present, the average values of x, w, y and z can be any integer in the range given such as 8 or a fractional integer such as 7.5, 7.8, 8.5 and the like.

A preferred group of nitrogen-containing cationic perfluoronated compounds for use in accordance with the methods of this invention is represented by the following formula:

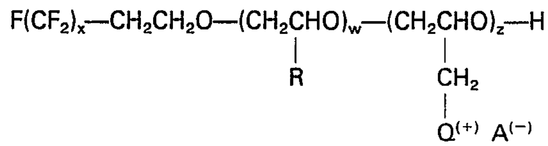

II

wherein x is an integer from 2 to 12 or an integer or fractional integer representing an average value of from 2 to 12; w is an integer from 1 to 20 or an integer or fractional integer representing an average value of from 1 to 20; z is an integer from 1 to 20 or a fractional integer representing an average value of from 1 to 20; R is from the group of hydrogen, methyl, ethyl, propyl radicals and mixtures thereof; $A^-$ is a halogen anion from the group consisting of chlorine, bromine and iodine; and $Q^+$ is a cationic nitrogen radical from the group consisting of an aromatic amino radical, a heterocyclic amino radical, and an amine radical represented by the formula:

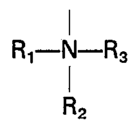

wherein: $R_1$, $R_2$ and $R_3$ are from the group consisting of hydrocarbon radicals containing from 1 to 30 carbon atoms, aromatic hydrocarbon radicals such as phenyl and any alkyl substituted phenyl radical, and hydrogen radicals, provided that at least one of $R_1$, $R_2$ and $R_3$ is an aliphatic hydrocarbon radical containing from 1 to 30 carbon atoms or an aromatic hydrocarbon and that when any one of $R_1$, $R_2$ and $R_3$ radicals contains more than four aliphatic carbon atoms or an aromatic hydrocarbon, the other two radicals are each chosen from the group consisting of hydrogen, methyl and ethyl radicals.

Of this group of compounds, when Q is an aromatic/heterocyclic amino radical, the most preferred compounds are those wherein x is an integer representing an average value of 8; w is an integer or fractional integer representing an average value of from 6 to 10; z is an integer or fractional integer representing an average value of from 1 to 3; R is methyl; and Q is a pyridino or quinolino radical.

When Q is an amine radical, the most preferred compounds are those wherein x is an integer representing an average value of 8; w is an integer or fractional integer representing an average value of from 6 to 8; z is an integer or fractional integer representing an average value of from 1 to 3; R is methyl; $R_1$, $R_2$ and $R_3$ are all methyl and A is chlorine.

Another preferred group of compounds are represented by the formula:

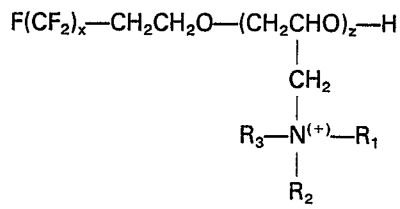

III

wherein x is an integer from 2 to 12 or an integer or fractional integer representing an average value of from 2 to 12; z is an integer from 1 to 20 or an integer or fractional integer representing an average value of from 1 to 20; $R_1$, $R_2$ and $R_3$ are each chosen from the group consisting of lower aliphatic hydrocarbon radicals containing from 1 to 4 carbon atoms; and $A^-$ is a halogen anion chosen from the group consisting of chlorine, bromine and iodine.

Of this group of compounds, the most preferred is where x is an integer representing an average value of 8; z is an integer or fractional integer representing an average value of from 1 to 3; $R_1$, $R_2$ and $R_3$ are all methyl and A is chlorine.

Yet another preferred group of compounds for use in accordance with the methods of the present invention are represented by the formula:

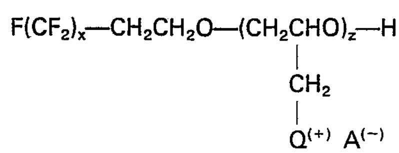

IV

wherein x is an integer from 2 to 12 or an integer or fractional integer representing an average value of from 2 to 12; z is an integer from 1 to 20 or an integer or fractional integer representing an average value of from 1 to 20; Q is a nitrogen-containing heterocyclic/aromatic cationic radical; and $A^-$ is a halogen anion chosen from chlorine, bromine and iodine anions.

Of this group of compounds, the most preferred is where x is an integer representing an average value of 8; z is an integer representing an average value of from 1 to 3; Q is a pyridino or quinolino radical; and A is chlorine.

The most preferred compounds for use in accordance with the present invention are those represented by Formula II above wherein x is an integer representing an average value of 8; w is an integer or fractional integer representing an average value of from 6 to 8; z is an integer or fractional integer representing a value of 1 to 3; Q is an amine radical wherein $R_1$, $R_2$ and $R_3$ are all methyl; and A is chlorine.

In carrying out the methods of the present invention to improve the productivity of a subterranean formation having impaired permeability, the penetrating solvent is introduced into the formation by pumping down a well bore penetrating the subterranean formation. The penetrating solvent disrupts the water or other aqueous fluid layer coating upon the solid surfaces in the subterranean formation, including the surfaces of any propant material that may be present, to permit contacting with the cationic perfluoro compound or compounds. The cationic perfluoro compound or compounds can be applied directly to a subterranean formation whereby the surfaces thereof are contacted by the compounds and adsorbed thereon. However, preferably, the cationic perfluoro compound or comnpounds utilized are dissolved or dispersed in a carrier fluid which is in turn introduced into the formation through the well bore penetrating the same whereby the carried cationic perfluoro compounds are distributed in the formation and contact solid surfaces therein whereby they are adsorbed thereon. Aqueous or hydrocarbon base carrier fluids can be utilized in the form of liquids, foams, emulsions, etc. The particular quantity of perfluoro compounds combined with the carrier fluid can vary widely depending upon the type of formation to be treated and other factors, but generally the cationic perfluoro compounds utilized are combined with the carrier fluid in an amount in the range of from about 0.01% to about 10% by weight of the carrier fluid. Particularly preferred carrier fluids are 50% alcohol foams.

In a preferred embodiment of the invention, the penetrating solvent employed to disrupt the water or aqueous fluid coating and the carrier fluid are the same fluids. In this instance, the penetrating solvent and cationic perfluoro compound or compounds are introduced together such that as the solvent disrupts the water coating the cationic perfluoro compound or compounds contact the water-free solid surfaces and are adsorbed thereon such that the solid surfaces now remain substantially non-wettable by water or hydrocarbons. When a proppant material has been placed in fractures formed in the subterranean formation by prior stimulation treatments, the penetrating solvent also disrupts the water coating on this material and the cationic perfluoro compound or compounds are adsorbed thereon. Thus, both the surfaces of the formation and the surfaces of the proppant material have cationic perfluoro compounds adsorbed thereon whereby such surfaces are substantially prevented from being wetted by water or hydrocarbons and the flow of hydrocarbons through the formation and proppant material is significantly increased.

In order to facilitate a clear understanding of the methods of the present invention, and not by way of limitation, the following Examples are provided.

Example I

A cationic perfluoro compound of Structural Formula II above is tested with a penetrating solvent to determine their effectiveness in treating a water block.

Test procedure

40—60 Ottawa Sand is sieved through a 50 mesh screen and placed in a horizontally positioned column comprising 1½" (3.75 cm) I.D.×12" (30 cm) cylindrical polypropylene tubing. The ends of the packed column are stoppered with a 1½" (3.75 cm) diameter 60 mesh screen and a number 0 stopper with a 9 mm hole. The column fluid entry point is equipped with a piece of 'Y'-shaped 9 mm tubing with a stopcock on each arm of the 'Y', one arm leads to the column; the other two arms lead to 500 ml water and oil reservoirs, which are placed 18" (45 cm) above the horizontal column to provide a constant head. The fluid exit point of the column is equipped with a 3" (45 cm) 120° elbow fashioned from 9 mm glass tubing. A 1" (2.5 cm) piece of 5 mm glass rod is annealed to the bend point of the elbow to direct flowing fluid into a collecting vessel. The elbow is pointed upward in order to maintain a constant, maximum fluid volume (no air entrapment).

The column is filled with distilled water and followed with one column volume of a test solution. This is followed immediately with Isopar L (a refined aliphatic oil). The time for the oil to displace the test solution is noted and the flow rate of the oil is measured (from the time of the first collected drop) for ten minutes.

The results of the tests are shown in Table I below.

TABLE I

| Test solution | Break-through | Time, (min) | Cumulative oil flow, (ml) |
|---|---|---|---|
| 1. 500 l/1000 l MeOH, 5 l/1000 l concentrated 28% HCl, 2 l/1000 l $C_{10}$—$C_{12}$ alcohol alkoxylate formulation and 2% KCl solution to provide 1000 gals (3785 l) | 4 min | | |
| | | 1 | 1.5 |
| | | 2 | 3.5 |
| | | 3 | 5.0 |
| | | 4 | 8.0 |
| | | 5 | 10.5 |
| | | 6 | 13.5 |
| | | 7 | 16.0 |
| | | 8 | 18.5 |
| | | 9 | 21.0 |
| | | 10 | 23.5 |
| | | Average oil flow rate 2.35 ml/min | |
| 2. Same as above plus 0.01% by weight cationic perfluoro compounds (Structural Formula II, x=8, w=8, R=$CH_3$, z=1.5, A=Cl, Q=trimethylamine | 2.5 min | | |
| | | 1 | 4.0 |
| | | 2 | 8.5 |
| | | 3 | 13.0 |
| | | 4 | 18.5 |
| | | .5 | 22.0 |
| | | 6 | 26.0 |
| | | 7 | 31.0 |
| | | 8 | 35.0 |
| | | 9 | 40.0 |
| | | 10 | 44.0 |
| | | Average oil flow rate 4.4 ml/min | |

From Table I it can be seen that the method of the present invention is effective in treating water blocked formations.

Example II

To further illustrate the effectiveness of the present invention in treating water blocked sandstone formations, the following test is performed.

A well in Moffat County, Colorado, is producing 100 MCF ($2.8 \times 10^6$ $m^3$) of gas per day from the Fort Union Sand Formation. The formation has a permeability of 0.1 millidarcy.

The well is treated in accordance with the methods of the present invention employing a fluid comprising 50 volume percent methanol, 2 l/1000 l $C_{10}$—$C_{12}$ alkoxylate formulation (foaming agent), 0.01 weight percent cationic perfluoro compounds (Structural Formula II, x=8, w=8, R=$CH_3$, z=1.5, A=Cl, Q=trimethylamine), 40 volume percent liquid nitrogen to provide a gas assist in fluid recovery and 2% KCl solution.

The well, after treatment, is producing 300 MCF ($8.4 \times 10^6$ $m^3$) of gas per day.

**Claims**

1. A method of increasing the production of hydrocarbons from a hydrocarbon-containing subterranean formation, which method comprises contacting said formation with at least one cationic perfluoro compound whereby said compound is adsorbed onto said solid surfaces of said formation, said cationic perfluoro compound(s) being of the formula:

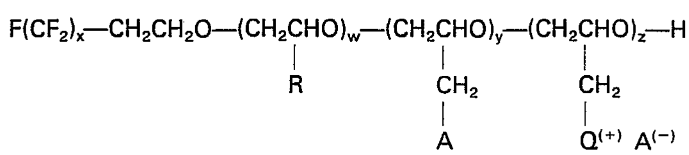

I

wherein x is an integer from 2 to 12 or an integer or fractional integer representing an average value of from 2 to 12; w and y are both individually integers from 0 to 20 or integers or fractional integers representing average values of from 0 to 20; z is an integer from 0 to 20 or an integer or fractional integer representing an average value of from 0 to 20, the sum of y and z being from 1 to 20; R is a hydrogen, methyl, ethyl or propyl

radical, or mixtures thereof; A is chlorine, bromine or iodine; and $Q^+$ is a cationic nitrogen radical selected from an aromatic amino radical, a heterocyclic amino radical, and an amine radical represented by the formula:

$$\begin{array}{c} | \\ R_1-N-R_3 \\ | \\ R_2 \end{array}$$

wherein $R_1$, $R_2$ and $R_3$ are independently selected from hydrocarbon radicals containing from 1 to 30 carbon atoms, aromatic hydrocarbon radicals such as phenyl and any alkyl substituted phenyl radical, and hydrogen radicals, provided that at least one of $R_1$, $R_2$ and $R_3$ is an aliphatic hydrocarbon radical containing from 1 to 30 carbon atoms or an aromatic hydrocarbon and that, when any one of $R_1$, $R_2$ and $R_3$ radicals contains more than four aliphatic carbon atoms of an aromatic hydrocarbon, the other two radicals are each chosen from the group consisting of hydrogen, methyl and ethyl radicals; characterised in that said formation has impaired permeability as a result of formation invasion by aqueous fluids, and wherein said formation is also contacted with a penetrating solvent capable of disrupting at least a portion of any aqueous layer present on solid surfaces within said formation.

2. A method according to claim 1, wherein said contacting of said formation with said cationic perfluoro compound or compounds is brought about by dissolving or dispersing said compound or compounds in a carrier fluid and introducing said carrier fluid into said formation, and wherein said cationic perfluoro compound is preferably present in said carrier fluid in an amount of from about 0.01% to about 10% by weight of said carrier fluid.

3. A method according to claim 1 or 2, wherein w and z are not 0.

4. A method according to claim 3, wherein x is 8; w is from 6 to 10; z is from 1 to 3; R is a methyl radical; A is chlorine; and $Q^+$ is the cationic nitrogen radical pyridino or quinolino.

5. A method according to claim 3, wherein x is 8; w is from 6 to 8; z is from 1 to 3; A is chlorine; and Q is a trimethylamino radical.

6. A method according to claim 1 or 2, wherein the or each cationic perfluoro compound is of the formula:

$$\begin{array}{l} F(CF_2)_x-CH_2CH_2O-(CH_2\underset{|}{C}HO)_z-H \\ \qquad\qquad\qquad\qquad\qquad\quad CH_2 \\ \qquad\qquad\qquad\qquad\qquad\quad | \\ \qquad\qquad\qquad\qquad\quad R_3-N^{(+)}-R_1 \qquad A^{(-)} \\ \qquad\qquad\qquad\qquad\qquad\quad | \\ \qquad\qquad\qquad\qquad\qquad\quad R_2 \end{array}$$

wherein x is an integer from 2 to 12 or an integer or fractional integer representing an average value of from 2 to 12; z is an integer of from 1 to 20 of an integer or fractional integer representing an average value of from 1 to 20; $R_1$, $R_2$ and $R_3$ are each lower aliphatic hydrocarbon radicals containing from 1 to 4 carbon atoms; and $A^-$ is an anion of chlorine, bromine or iodine.

7. A method according to claim 6, wherein x is 8; z is from 1 to 3; $R_1$, $R_2$ and $R_3$ are each methyl radicals; and $A^-$ is a chlorine anion.

8. A method according to claim 1 or 2, wherein the or each cationic perfluoro compound is of the formula:

$$\begin{array}{l} F(CF_2)_x-CH_2CH_2O-(CH_2\underset{|}{C}HO)_z-H \\ \qquad\qquad\qquad\qquad\qquad\quad CH_2 \\ \qquad\qquad\qquad\qquad\qquad\quad | \\ \qquad\qquad\qquad\qquad\qquad\quad Q^{(+)}\ A^{(-)} \end{array}$$

wherein x is an integer from 2 to 12 or an integer or fractional integer representing an average value of from 2 to 12; z is an integer of from 1 to 20 or an integer or fractional integer representing an average value of from 1 to 20, $Q^+$ is a nitrogen-containing heterocyclic or aromatic cationic radical; and $A^-$ is an anion of chlorine, bromine or iodine.

9. A method according to claim 8, wherein either; x is 8; z is from 1 to 3; $Q^+$ is a cationic pyridino or quinolino radical; and $A^-$ is a chlorine anion.

10. A method according to claim 1 or 2, wherein x is from 4 to 10; w is from 0 to 12; y is 0; z is from 1 to 8; R is a hydrogen or methyl radical; A is chlorine; and Q is a trimethylamino, pyridino, quinolino, isoquinolino, N,N-dimethyl anilino, N-methyl morpholino or morpholino radical.

**Patentansprüche**

1. Verfahren zur Erhöhung der Kohlenwasserstoffproduktion aus einer Kohlenwasserstoff führenden unterirdischen Formation, bei welchem Verfahren die Formation mit wenigstens einer kationischen

perfluorierten Verbindung in Kontakt gebracht wird, die an festen Oberflächen der Formation adsorbiert wird und die Formel

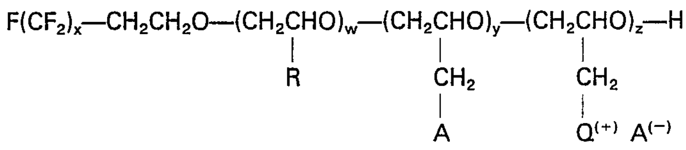

hat, in der x eine ganze Zahl im Bereich von 2 bis 12 oder eine einen Durchschnittswert im Bereich von 2 bis 12 darstellende ganze oder gebrochene Zahl ist, w und y jeweils ganze Zahlen im Bereich von 0 bis 20 oder Durchschnittswerte im Bereich von 0 bis 20 darstellende ganze oder gebrochene Zahle sind, z eine ganze Zahl im Bereich von 0 bis 20 oder eine einen Durchschnittswert im Bereich von 0 bis 20 darstellende ganze oder gebrochene Zahl ist und die Summe von y und z einen Wert im Bereich von 1 bis 20 hat, R ein Wasserstoff-, Methyl-, Ethyl- oder Propylrest oder ein Gemisch solcher Reste ist, A Chlor, Brom oder Jod ist, und $Q^+$ ein kationischer Stickstoffrest aus der Gruppe aromatischer Aminorest, heterozyklischer Aminorest und ein Aminorest der Formel

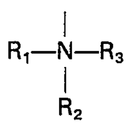

ist, in der $R_1$, $R_2$ und $R_3$ unabhängig voneinander aus der Gruppe Kohlenwasserstoffreste mit 1 bis 30 Kohlenstoffatomen, aromatische Kohlenwasserstoffreste wie Phenyl oder irgendein Alkylphenyl und Wasserstoff ausgewählt sind, vorausgesetzt, daß wenigstens einer der Reste $R_1$, $R_2$ und $R_3$ ein aliphatischer Kohlenwasserstoffrest mit 1 bis 30 Kohlenstoffatomen oder ein aromatischer Kohlenwasserstoffrest ist und, wenn einer der Reste $R_1$, $R_2$ oder $R_3$ mehr als vier aliphatische Kohlenstoffatome enthält oder ein aromatischer Kohlenwasserstoffrest ist, die anderen beiden Reste jeweils aus der Gruppe Wasserstoff, Methyl und Ethyl ausgewählt sind, dadurch gekennzeichnet, daß die Formation als Ergebnis des Einbringens wäßriger Fluide in die Formation beeinträchtigte Durchlässigkeit besitzt und daß die Formation ebenfalls mit einem die Formation durchdringenden Lösungsmittel in Kontakt gebracht wird, das in der Lage ist, wenigstens einen Teil einer wäßrigen Schicht zu entfernen, die sich an den festen Oberflächen der Formation befindet.

2. Verfahren nach Anspruch 1, dadurch gekennzeichnet, daß die Formation mit der kationischen perlfuorierten Verbindung oder den kationischen perfluorierten Verbindungen dadurch in Kontakt gebracht wird, daß die Verbindung oder die Verbindungen in einer Trägerflüssigkeit gelöst oder dispergiert wird bzw. werden und die Trägerflüssigkeit in die Formation eingebracht wird und daß die kationische perfluorierte Verbindung in der Trägerflüssigkeit vorzugsweise in einer Menge im Bereich von 0,01 bis 10 Gew.-% bezogen auf die Trägerflüssigkeit enthalten ist.

3. Verfahren nach Anspruch 1 oder 2, dadurch gekennzeichnet, daß w und z nicht 0 sind.

4. Verfahren nach Anspruch 3, dadurch gekennzeichnet, daß x=8, w 6 bis 10, z 1 bis 3, R Methyl, A Chlor und $Q^+$ ein kationischer Pyridin- oder Chinolinrest ist.

5. Verfahren nach Anspruch 3, dadurch gekennzeichnet, daß x=8, w 6 bis 8, z 1 bis 3, A Chlor und Q ein Trimethylaminrest ist.

6. Verfahren nach Anspruch 1 oder 2, dadurch gekennzeichnet, daß die oder jede kationische perfluorierte Verbindung die Formel

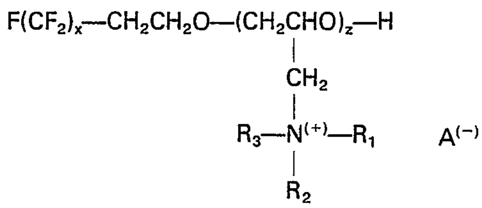

hat, in der x eine ganze Zahl im Bereich von 2 bis 12 oder eine einen Durchschnittswert im Bereich von 2 bis 12 darstellende ganze oder gebrochene Zahl ist; z eine ganze Zahl im Bereich von 1 bis 20 oder eine einen Durchschnittswert im Bereich von 1 bis 20 darstellende ganze oder gebrochene Zahl ist; $R_1$, $R_2$ und $R_3$ jeweils niedere aliphatische Kohlenwasserstoffreste mit 1 bis 4 Kohlenstoffatomen sind und $A^-$ ein Anion von Chlor, Brom oder Jod ist.

7. Verfahren nach Anspruch 6, dadurch gekennzeichnet, daß x=8, z 1 bis 3, $R_1$, $R_2$ und $R_3$ jeweils Methyl und $A^-$ ein Chloranion ist.

8. Verfahren nach Anspruch 1 oder 2, dadurch gekennzeichnet, daß die oder jede kationische perfluorierte Verbindung der Formel

$$F(CF_2)_x\text{—}CH_2CH_2O\text{—}(CH_2\underset{\underset{|}{\underset{Q^{(+)}\ A^{(-)}}{CH_2}}}{\underset{|}{C}}HO)_z\text{—}H$$

hat, in der x eine ganze Zahl im Bereich von 2 bis 12 oder eine einen Durchschnittswert im Bereich von 2 bis 12 darstellende ganze oder gebrochene Zahl ist, z eine ganze Zahl im Bereich von 1 bis 20 oder eine einen Durchschnittswert im Bereich von 1 bis 20 darstellende ganze oder gebrochene Zahl ist, $Q^+$ ein stickstoffhaltiger heterozyklischer oder aromatischer, kationischer Rest und $A^-$ ein Anion von Chlor, Brom oder Jod ist.

9. Verfahren nach Anspruch 8, dadurch gekennzeichnet, daß x=8, z 1 bis 3, $Q^+$ ein kationischer Pyridin- oder Chinolinrest und $A^-$ ein Chloranion ist.

10. Verfahren nach Anspruch 1 oder 2, dadurch gekennzeichnet, daß x 4 bis 10, w 0 bis 12, y=0, z 1 bis 8, R Wasserstoff oder Methyl, A Chlor und Q ein Trimethylamin-, Pyridin-, Chinolin-, Isochinolin-, N,N-Dimethylanilin-, N-Methylmorpholin- oder Morpholinrest ist.

**Revendications**

1. Procédé pour augmenter la production d'hydrocarbures à partir d'une formation souterraine contenant des hydrocarbures, dans lequel on met en contact ladite formation avec au moins un composé cationique perfluoré grâce à quoi ledit composé est adsorbé sur lesdites surfaces solides de ladite formation, le ou chaque composé cationique perfluoré étant de formule:

$$F(CF_2)_x\text{—}CH_2CH_2O\text{—}(CH_2\underset{\underset{R}{|}}{C}HO)_w\text{—}(CH_2\underset{\underset{|}{\underset{A}{CH_2}}}{\underset{|}{C}}HO)_y\text{—}(CH_2\underset{\underset{|}{\underset{Q^{(+)}\ A^{(-)}}{CH_2}}}{\underset{|}{C}}HO)_z\text{—}H$$

dans laquelle x est un entier de 2 à 12, ou un entier ou un nombre fractionnaire représentant une valeur moyenne de 2 à 12; w et y sont indépendamment des entiers de 0 à 20, ou des entiers ou des nombres fractionnaires représentant des valeurs moyennes de 0 à 20; z est un entier de 0 à 20, ou un entier ou un nombre fractionnaire représentant une valeur moyenne de 0 à 20, la somme de y et z étant de 1 à 20; R est un atome d'hydrogène, un groupe méthyle, éthyle ou propyle, ou des mélanges de ceux-ci; A est un atome de chlore, de brome ou d'iode; et $Q^+$ est un groupe azoté cationique choisi parmi un groupe amino aromatique, un groupe amino hétérocyclique, et un groupe amine représenté par la formule:

$$R_1\text{—}\overset{|}{\underset{\underset{R_2}{|}}{N}}\text{—}R_3$$

dans laquelle $R_1$, $R_2$ et $R_3$ sont indépendamment choisis parmi des groupes hydrocarbonés contenant de 1 à 30 atomes de carbone, des groupes hydrocarbonés aromatiques, tels qu'un groupe phényle et un groupe phényle substitué par un groupe alkyle quelconque, et un atome d'hydrogène à condition qu'au moins un des groupes $R_1$, $R_2$, et $R_3$ soit un groupe hydrocarboné aliphatique contenant de 1 à 30 atomes de carbone ou un groupe hydrocarboné aromatique et que lorsque l'un quelconque des groupes $R_1$, $R_2$ et $R_3$ contient plus de 4 atomes de carbone aliphatiques ou un groupe hydrocarboné aromatique, les deux autres groupes soient choisis chacun parmi un atome d'hydrogène, un groupe méthyle et un groupe éthyle; caractérisé en ce que ladite formation a une perméabilité altérée à la suite de la pénétration de fluides aqueux dans la formation, et en ce que ladite formation est également mise en contact avec un solvant pénétrant susceptible de rompre au moins une partie d'une quelconque couche aqueuse présente sur les surfaces solides à l'intérieur de ladite formation.

2. Procédé suivant la revendication 1, dans lequel on effectue ladite mise en contact de ladite formation avec le ou chacun desdits composés cationiques perfluorés en dissolvant ou en dispersant le ou chacun desdits composés dans un véhicule fluide et en introduisant ledit véhicule fluide dans ladite formation, et dans lequel ledit composé cationique perfluoré est de préférence présent dans ledit véhicule fluide en une quantité d'environ 0,01% à environ 10% du poids dudit véhicule fluide.

3. Procédé suivant la revendication 1 ou 2, dans lequel w et z ne sont pas égaux à 0.

4. Procédé suivant la revendication 3, dans lequel x est égal à 8; w est de 6 à 10; z est de 1 à 3, R est un groupe méthyle; A est un atome de chlore; et $Q^+$ est le groupe azoté catonique pyridino ou quinoléino.

5. Procédé suivant la revendication 3, dans lequel x est égal à 8, w est de 6 à 8; z est de 1 à 3; A est un atome de chlore; et Q est un groupe triméthylamino.

6. Procédé suivant la revendication 1 ou 2, dans lequel le ou chaque composé cationique perfluoré est de formule:

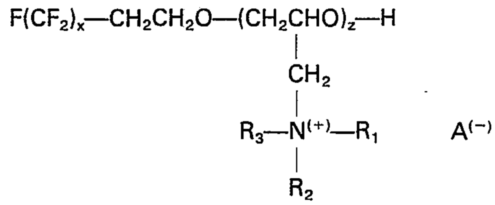

dans laquelle x est un entier de 2 à 12, ou un entier ou un nombre fractionnaire représentant une valeur moyenne de 2 à 12; z est un entier de 1 à 20, ou un entier ou un nombre fractionnaire représentant une valeur moyenne de 1 à 20; $R_1$, $R_2$ et $R_3$ sont chacun des groupes hydrocarbonés aliphatiques inférieurs contenant de 1 à 4 atomes de carbone; et $A^-$ est un anion de chlore, de brome ou d'iode.

7. Procédé suivant la revendication 6, dans lequel x est égal à 8; z est de 1 à 3; $R_1$, $R_2$ et $R_3$ sont chacun des groupes méthyle; et $A^-$ est un anion d'atome de chlore.

8. Procédé suivant la revendication 1 ou 2, dans lequel le ou chaque composé cationique perfluoré est de formule:

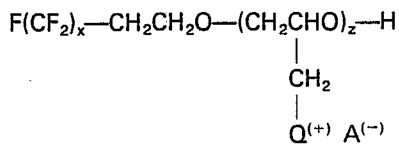

dans laquelle x est un entier de 2 à 12, ou un entier ou un nombre fractionnaire représentant une valeur moyenne de 2 à 12; z est un entier de 1 à 20, ou un entier ou un nombre fractionnaire représentant une valeur moyenne de 1 à 20; $Q^+$ est un groupe cationique azoté hétérocyclique ou aromatique; et $A^-$ est un anion d'atome de chlore, de brome ou d'iode.

9. Procédé suivant la revendication 8, dans lequel x est égal à 8; z est de 1 à 3; $Q^+$ est un groupe cationique pyrydino ou quinoléino; et $A^-$ est un anion d'atome de chlore.

10. Procédé suivant la revendication 1 ou 2, dans lequel x est de 4 à 10; w est de 0 à 12; y est égal à 0; z est de 1 à 8; R est un atome d'hydrogène ou un groupe méthyle; A est un atome de chlore et Q est un groupe triméthylamino, pyridino, quinoléino, isoquinoléino, N,N-diméthyl anilino, N-méthyl morpholino ou morpholino.